# EUROPEAN PATENT APPLICATION

(11) **EP 1 345 363 A2**
(43) Date of publication of application: **17.09.2003**
(21) Application number: 03005600.6
(22) Date of filing: 12.03.2003
(51) Int. Cl.: H04L 12/56

(54) **Scalable packet filter for a network device**

(30) Priority: 15.03.2002 US 364150 P; 30.09.2002 US 414345 P; 27.01.2003 US 351487
(71) Applicant: Broadcom Corporation, Irvine, California 92618-7013 (US)
(72) Inventor: Sampath, Srinivas, 94087 San Jose, California (US); Kalkunte, Mohan, 94087 San Jose Hills, California (US)
(74) Representative: Jehle, Volker Armin, Dipl.-Ing.

(57) **Abstract**

A network device for network communications is disclosed. The device includes at least one data port interface, the at least one data port interface supporting at least one data port transmitting and receiving data and a CPU interface, the CPU interface configured to communicate with a CPU. The network device also includes a memory communicating with the at least one data port interface, a memory management unit, the memory management unit including a memory interface for communicating data from the at least one data port interface and the memory and a communication channel, the communication channel for communicating data and messaging information between the at least one data port interface, the CPU interface, the memory, and the memory management unit. The network device also includes a fast filtering processor, the fast filtering processor filtering packets coming into the at least one data port interface, and taking selective filter action on a particular packet of the packets based upon specified packet field values. The specified packet field values are obtained by applying a filter mask, obtained from a field table, to the particular packet and the selective filter action is obtained from a policy table based on the specified packet field values.

## Description

### REFERENCE TO RELATED APPLICATIONS:

This application claims priority of United States Provisional Patent Application Serial No. 60/364,150, filed on March 15, 2002, and United States Provisional Patent Application Serial No. 60/414,345, filed on September 30, 2002. The contents of the provisional applications are hereby incorporated by reference.

### BACKGROUND OF THE INVENTION

### FIELD OF INVENTION

The present invention relates to network devices, including switches, routers and bridges, which allow for data to be routed and moved in computing networks. More specifically, the present invention provides for a scalable packet filter for filtering packet data in network devices.

### DESCRIPTION OF RELATED ART

In computer networks, each element of the network performs functions that allow for the network as a whole to perform the tasks required of the network. One such type of element used in computer networks is referred to, generally, as a switch. Switches, as they relate to computer networking and to Ethernet, are hardware-based devices which control the flow of data packets or cells based upon destination address information which is available in each packet. A properly designed and implemented switch should be capable of receiving a packet and switching the packet to an appropriate output port at what is referred to wirespeed or linespeed, which is the maximum speed capability of the particular network.

Basic Ethernet wirespeed is up to 10 megabits per second, and Fast Ethernet is up to 100 megabits per second. Another type of Ethernet is referred to as 10 gigabit Ethernet, and is capable of transmitting data over a network at a rate of up to 10,000 megabits per second. As speed has increased, design constraints and design requirements have become more and more complex with respect to following appropriate design and protocol rules and providing a low cost, commercially viable solution.

This is similarly important with respect to filtering by a network device. Filtering by a network device may be as simple as classification of data passing through the network device to allow an administrator to determine the type and quantity of data flowing through the network device. Additionally, filtering may also include management of flows through the network device and allow for the specific handling of certain data based on fields within the packet. These fields contain data about the source, destination, protocol and other properties of the packet.

In many network devices, such filtering is often simplistic and filters packets through "brute force" methods. Many such filtering systems are similar to the filtering processes described in U.S. Patent Number 6,335,935, which is hereby incorporated by reference, that provide filtering results but require that a significant portion of the network device be utilized in the filtering process. The filtering processes are generally not expandable, often take a great number of cycles to process and increase the latency periods for address resolution lookup (ARL) and ingress processes.

As such, there is a need for an efficient filtering method and a scalable filtering mechanism for data passing through network devices. In addition, there is a need for a method that allows for fewer cycles to process the filtering and decreases the latency for other processes performed by the network device. Such a filter should allow for the incoming packet to be parsed and for relevant packet fields of interest to users to be identified.

### SUMMARY OF THE INVENTION

It is an object of this invention to overcome the drawbacks of the above-described conventional network devices and methods. The present invention provides for a scalable packet filter for data packets passing through network devices.

According to one aspect of this invention, a network device for network communications is disclosed. The device includes at least one data port interface, the at least one data port interface supporting at least one data port transmitting and receiving data and a CPU interface, the CPU interface configured to communicate with a CPU. The network device also includes a memory communicating with the at least one data port interface, a memory management unit, the memory management unit including a memory interface for communicating data from the at least one data port interface and the memory and a communication channel, the communication channel for communicating data and messaging information between the at least one data port interface, the CPU interface, the memory, and the memory management unit. The network device also includes a fast filtering processor, the fast filtering processor filtering packets coming into the at least one data port interface, and taking selective filter action on a particular packet of the packets based upon specified packet field values. The specified packet field values are obtained by applying a filter mask, obtained from a field table, to the particular packet and the selective filter action is obtained from a policy table based on the specified packet field values.

Alternatively, the network device fast filtering processor may be programmable by inputs from the CPU through the CPU interface. The at least one data port interface may include a flow table interface and a flow table thereupon, wherein the specified packet field values are used to obtain a policy value from the flow table and the selective filter action is obtained from a policy table based on the policy value. Additionally, the at least one data port interface, CPU interface, memory, memory management unit, communications channel, fast filtering processor, and the flow table may be implemented on a common semiconductor substrate.

Also, the specified packet field values may be selected based upon flows of data packets through the network device. The flows of data packets may be defined by at least one of a source internet protocol address, a destination internet protocol address, a source media access controller address, a destination media access controller address and a protocol for the particular packet. The fast filtering processor may also include a priority assignment unit for assigning a weighted priority value to untagged packets entering the at least one data port interface. The fast filtering processor may filter the packets independent of the CPU interface, and therefore without communicating with the CPU. The network switch may also include a tagging unit which applies an IEEE defined tag to incoming packets, the IEEE defined tag identifying packet parameters, including class-of-service.

According to another aspect of this invention, a method of handling data packets in a network device is disclosed. An incoming packets is placed into an input queue and the input data packets are applied to an address resolution logic engine. A lookup is performed to determine whether certain packet fields are stored in a lookup table and the incoming packet is filtered through a fast filtering processor based on specified packet field values obtained from the incoming packets to obtain a selective filter action. The packet is discarded, forwarded, or modified based upon the filtering. The selective filter action is obtained from a policy table based on the specified packet field values.

The method may include obtaining a policy value from a flow table based on the specified packet field values and obtaining the selective filter action from a policy table based on the policy value. Additionally, the steps of performing a lookup and filtering the incoming packet through a fast filtering processor may be performed concurrently. Also, the filtering of the incoming packet may be based on specified packet field values selected based upon flows of data packets through the network device. The incoming packet may be tagged with an IEEE defined tag, including class-of-service (COS) priority.

These and other objects of the present invention will be described in or be apparent from the following description of the preferred embodiments.

### BRIEF DESCRIPTION OF THE DRAWINGS

For the present invention to be easily understood and readily practiced, preferred embodiments will now be described, for purposes of illustration and not limitation, in conjunction with the following figures:
Fig. 1 is a general block diagram of elements of an example of the present invention;
Fig. 2 is a data flow diagram of a packet on ingress to the switch; and
Fig. 3 is a flow chart illustrating a process of filtering packets, according to one embodiment of the present invention.

### DETAILED DESCRIPTION OF PREFERRED EMBODIMENTS

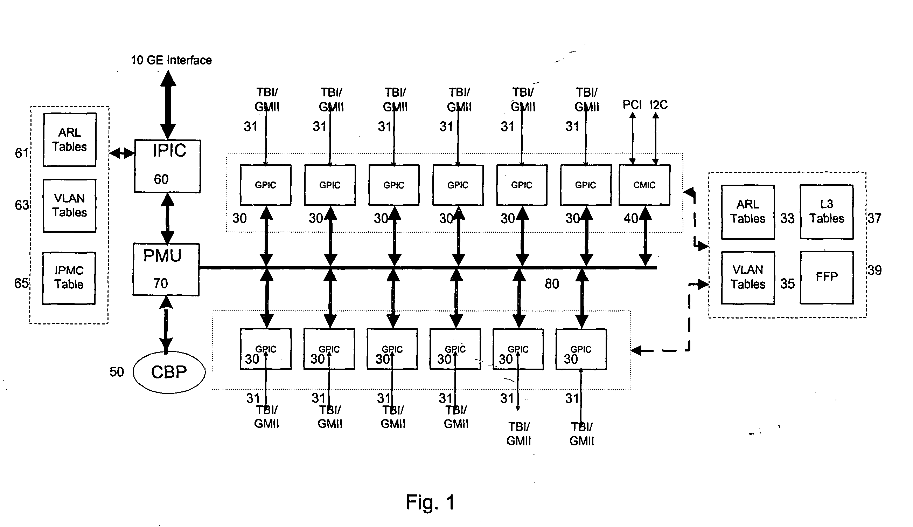

Fig. 1 illustrates a configuration wherein a switch-on-chip (SOC) 10, in accordance with one embodiment of the present invention, is illustrated. The following are the major blocks in the chip: Gigabit Port Interface Controller (GPIC) 30; Interconnect Port Interface Controller (IPIC) 60; CPU Management Interface Controller (CMIC) 40; Common Buffer Pool (CBP)/Common Buffer Manager (CBM) 50; Pipelined Memory Management Unit (PMU) 70; and Cell Protocol Sideband (CPS) Channel 80. The above components are discussed below. In addition, a Central Processing Unit (CPU) (not shown) can be used as necessary to program the SOC 10 with rules which are appropriate to control packet processing. However, once SOC 10 is appropriately programmed or configured, SOC 10 operates, as much as possible, in a free running manner without communicating with CPU.

The Gigabit Port Interface Controller (GPIC) module interfaces to the Gigabit port 31. On the medium side it interfaces to the TBI/GMII or MII from 10/100 and on the chip fabric side it interfaces to the CPS channel 80. Each GPIC supports a 1 Gigabit port or a 10/100 Mbps port. Each GPIC performs both the ingress and egress functions.

On the Ingress, the GPIC supports the following functions: 1) L2 Learning (both self and CPU initiated); 2) L2 Management (Table maintenance including Address Aging); 3) L2 Switching (Complete Address Resolution: Unicast, Broadcast/Multicast, Port Mirroring, 802.1Q/802.1p); 4) FFP (Fast Filtering Processor), including the IRULES Table); 5) a Packet Slicer; and 6) a Channel Dispatch Unit.

On the Egress the GPIC supports the following functions: 1) Packet pooling on a per Egress Manager (EgM) / COS basis; 2) Scheduling; 3) HOL notification; 4) Packet Aging; 5) CBM control; 6) Cell Reassembly; 7) Cell release to FAP (Free Address Pool); 8) a MAC TX interface; and 9) Adds Tag Header if required.

It should be noted that any number of gigabit Ethernet ports 31 can be provided. In one embodiment, 12 gigabit ports 31 can be provided. Similarly, additional interconnect links to additional external devices and/or CPUs may be provided as necessary. In addition, while the present filtering process is discussed with respect to the network device disclosed herein, the use of the scalable packet filter of the present invention is not limited to such a network device.

The Interconnect Port Interface Controller (IPIC) 60 module interfaces to CPS Channel 80 on one side and a high speed interface, such as a HiGig™ interface, on the other side. The HigGig is a XAUI interface, providing a total bandwidth of 10 Gbps.

The CPU Management Interface Controller (CMIC) 40 block is the gateway to the host CPU. In it's simplest form it provides sequential direct mapped accesses between the CPU and the network device. The CPU has access to the following resources on chip: all MIB counters; all programmable registers; Status and Control registers; Configuration registers; ARL tables; 802.1Q VLAN tables; IP Tables (Layer-3); Port Based VLAN tables; IRULES Tables; and CBP Address and Data memory.

The bus interface is a 66MHz PCI. In addition, an I2C (2-wire serial) bus interface is supported by the CMIC, to accommodate low-cost embedded designs where space and cost are a premium. CMIC also supports: both Master and Target PCI (32 bits at 66 MHz); DMA support; Scatter Gather support; Counter DMA; and ARL DMA.

The Common Buffer Pool (CBP) 50 is the on-chip data memory. Frames are stored in the packet buffer before they are transmitted out. The on-chip memory size is 1.5 Mbytes. The actual size of the on-chip memory is determined after studying performance simulations and taking into cost considerations. All packets in the CBP are stored as cells. The Common Buffer Manager (CBM) does all the queue management. It is responsible for: assigning cell pointers to incoming cells; assigning PIDs (Packet ID) once the packet is fully written into the CBP; management of the on-chip Free Address Pointer pool (FAP); actual data transfers to/from data pool; and memory budget management.

The Cell Protocol Sideband (CPS) Channel 80 is a channel that "glues" the various modules together as shown in Figure 1. The CPS channel actually consists of 3 channels :
a Cell ( C ) Channel: All packet transfers between ports occur on this channel;
a Protocol (P) Channel: This is a synchronous to the C-channel and is locked to it. During cell transfers the message header is sent via the P-channel by the Initiator (Ingress/PMMU); and
a Sideband (S) Channel: its functions are CPU management, MAC counters, register accesses, memory accesses etc; chip internal flow control, Link updates, out queue full etc; and chip inter-module messaging, ARL updates, PID exchanges, Data requests etc. The side band channel is 32 bits wide and is used for conveying Port Link Status, Receive Port Full, Port Statistics, ARL Table synchronization, Memory and Register access to CPU and Global Memory Full and Common Memory Full notification.

When the packet comes in from the ingress port the decision to accept the frame for learning and forwarding is done based on several ingress rules. These ingress rules are based on the Protocols and Filtering Mechanisms supported in the switch. The protocols which decide these rules could include, for example, IEEE 802.1d (Spanning Tree Protocol), 802.1p and 802.1q. Extensive Filtering Mechanism with inclusive and exclusive Filters is supported. These Filters are applied on the ingress side, and depending on the filtering result, different actions are taken. Some of the actions may involve changing the 802.1p priority in the packet Tag header, changing the Type Of Service (TOS) Precedence field in the IP Header or changing the egress port.

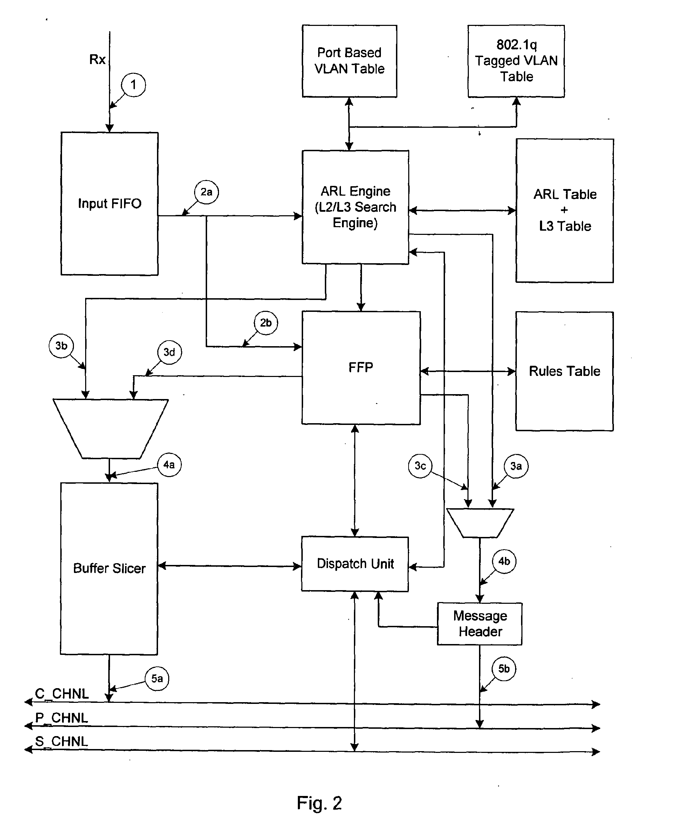

The data flow on the ingress into the switch will now be discussed with respect to Fig. 2. As the packet comes in, it is put in the Input FIFO, as shown in step 1. An Address Resolution Request is sent to the ARL Engine as soon as first 16 bytes arrive in the Input FIFO at 2a. If the packet has 802.1q Tag then the ARL Engine does the lookup based on 802.1q Tag in the TAG BASED VLAN TABLE. If the packet does not contain 802.1q Tag then ARL Engine gets the VLAN based on the ingress port from the PORT BASED VLAN TABLE. Once the VLAN is identified for the incoming packet, ARL Engine does the ARL Table search based on Source Mac Address and Destination Mac Address. The key used in this search is Mac Address + VLAN Id. If the result of the ARL search is one of the L3 Interface Mac Address, then it does the L3 search to get the Route Entry. If an L3 search is successful then it modifies the packet as per Packet Routing Rules.

At step 2b, a Filtering Request is sent to Fast Filtering Processor (FFP) as soon as first 64 bytes arrive in the Input FIFO. The outcome of the ARL search, step 3a, is the egress port/ ports, the Class Of Service (COS), Untagged Port Bitmap and also in step 3b the modified packet in terms of Tag Header, or L3 header and L2 Header as per Routing Rules. The FFP applies all the configured Filters and results are obtained from the RULES TABLE.

The outcome of the Filtering Logic, at 3c, decides if the packet has to be discarded, sent to the CPU or, in 3d, the packet has to be modified in terms of 802.1q header or the TOS Precedence field in the IP Header. If the TOS Precedence field is modified in the IP Header then the IP Checksum needs to be recalculated and modified in the IP Header.

The outcome of FFP and ARL Engine, in 4a, are applied to modify the packet in the Buffer Slicer. Based on the outcome of ARL Engine and FFP, 4b, the Message Header is formed ready to go on the Protocol Channel. The Dispatch Unit sends the modified packet over the cell Channel, in 5a, and at the same time, in 5b, sends the control Message on the Protocol Channel. The Control Message contains the information such as source port number, COS, Flags, Time Stamp and the bitmap of all the ports on which the packet should go out and Untagged Bitmap.

In prior art implementations of filtering, in some cases, a filter database was employed that contained filters to be applied to the packets and associated rules table for each filter that matched the packet data. For the fields, which are of interest, the mask could be set to all l's and for other fields the mask could be set to zero. The filter logic then goes through all the masks and applies the mask portion of the filter to portions of the packet. The result of this operation generates a search key, the search key being used to search for the match in the rules table. A Metering table is also provided, where this table is used to determine if the packet is in-profile or out-profile. The index to this table is the Meter ID Table, where the meter id is obtained when there is a Full Match in the rules table for a given filter mask. The counters are implemented as a token bucket.

If the packet is in-profile, then the packet is sent out as in-profile and actions associated with in-profile are taken. At the end of the packet, the packet length is subtracted from the BucketCount. If the BucketCount is less than or equal to the threshold, measured in tokens, then the associated status bit is changed to be out-profile otherwise there is no change in the status bit. If the packet is out-profile, the BucketCount is left unchanged. The threshold value is hard coded to a certain number of tokens for all port speeds. When the refresh timer expires, new tokens are added to the token bucket and if the BucketCount is greater than or equal to the threshold, the status bit is set to in-profile; otherwise it is out-profile. The status bit can change in this example at two points in time: 1) When the packet is done from in-profile to out-profile and 2) when the refresh tokens are added (from out-profile to in-profile).

In contrast to the prior art processes and filters, the present invention makes many improvements. The present scalable packet filter allows for classification based on IP fields: Source IP, Destination IP, Protocol, User Datagram Protocol/Transmission Control Protocol (UDP/TCP), Source (UDP/TCP) Port and Destination (UDP/TCP) Port or based on Source and Destination IP subnets. The present scalable packet filter allows for classification based on L2 fields, such as destination Media Access Controller (MAC) Address, source MAC Address and Virtual Local Area Network (VLAN). The present scalable packet filter also allows for flow based metering in order to be able to restrict either Individual flows or Subnets. The present scalable packet filter allows for a single unified design for the chip, has a scalable number of Flows, and is designed with issues like routing and latency in mind.

The present scalable packet filtering mechanism parses fields of interest that need to be parsed from the packet. These fields include Ethernet and IPv4 fields, as well as IPv6 fields, which are parsed. Also, while more than a 100 IP Protocol are defined, the ones of real interest may be only TCP and UDP and the only Layer 4 protocols parsed may be TCP and UDP. Some possible fields that may be parsed are: destination MAC address (48 bits); source MAC Address (48 bits); VLAN tag (VLAN ID and Priority) (16 bits); destination IP Address (32 bits); source IP Address (32 bits); Protocol - encoded in 3 bits as below; IP Protocol (8) - encoded in 2 bits as below; Destination TCP/UDP Port (16 bits); Source TCP/UDP (16 bits); Ingress Port (4-5 bits depending on the number of ports on chip); TOS (3 bits); and DSCP (6 bits).

Prior network devices have not generally parsed Layer 4 protocols on ingress. It may be necessary to enhance the ingress to add this parsing ability. The IP Header in the packet may carry options that make the IP Header of variable length. Also, in the need to conserve space, the Protocol and IP Protocol field will be encoded. Encoding for 3 bit Protocol Field:

**TABLE 1**

| **Value** | **Meaning** |
|---|---|
| 000 | Ipv4 Packet |
| 001 | Ipv6 Packet |
| 011-111 | Reserved |

Encoding for 2 bit Protocol Field:

**TABLE 2**

| Value | Meaning |
|---|---|
| 00 | TCP Packet |
| 01 | UDP Packet |
| 10-11 | Reserved |

While it is possible for a user to filter on all of the above fields - 230 bits (and more) at the same time, in reality, it is likely that fewer are actually needed. In order to simplify the design and to support a larger number of flows, the total number of fields that need to be compared at one time is limited. The combinations likely to be used include the following:
L2 Flow Specification - Source MAC Address, Destination MAC Address and VLAN ID and Source Port is a total of 48 + 48 + 12 + 5 = 113 bits.
IP Flow Specification - Source IP Address, Destination IP Address, Source TCP/UDP Port, Destination TCP/UDP Port, Protocol, IP Protocol, TOS and Ingress Port is a total of 32+32+16+16+2+3+8+5=114 bits.
Source/Destination Only - MAC Address, IP Address, TCP/UDP Port, Ingress Port is a total of 48 + 12 + 32 + 5 = 111 bits.
IP Address range specification via Subnets - Source IP Subnet and Destination IP Subnet, TCP/UDP Port and Ingress Port is total of 32+32+16+5=85.

There is also a need to support filtering on various fields like VLAN, Ingress Port, etc. Finally, as a catchall, this embodiment of the present filtering process supports an arbitrary 16 bit field in the packet that is selected in the ingress. The Field Table specifies the fields of interest for this filter and is described below. For each valid entry in the Field Table, a search is made in the flow table. The number of field table entries that can supported is thus dependent on the number of cycles available to process each packet. It should be possible to support 8-16 entries for Gigabit ports and, for example, 4 entries for 10 Gigabit Ethernet ports. The user may specify Fields in three portions. The first two portions are of 48 bits each and the third of 16 bits. The portion sizes have been selected in this way to make it easy for the user to specify either MAC addresses or IP Address / L4 Ports combination in the 48 bit portion s and the VLAN ID and other fields in the 16 bit portion. There is also an option to have the user specify an arbitrary 16 bits of the packet (only up to 80 bytes into the packet). The offset for this field is specified in the Ingress and parsed there before it is passed to the SPF logic. A description of the Field Table is provided in TABLE 3:

**TABLE 3**

| **Field** | **Size** | **Description** |
|---|---|---|
| F1 | 3 | This selects the first 48 bits of the Filter. |
| | | 000 - Source MAC Address |
| | | 001 - Destination MAC Address |
| | | 010 - Source IP Address & L4 Source Port |
| | | 011 - Destination IP Address & L4 Port |
| | | 100 - Use User Defined 16 bit field |
| F2 | 3 | This is used to select the second 48 bits to filter on |
| | | 000 - Source MAC Address |
| | | 001 - Destination MAC Address |
| | | 010 - Source IP Address & L4 Source Port |
| | | 011 - Destination IP Address & L4 Port |
| | | 100 - Use User Defined 16 bit field |
| L2L3 | 2 | This is used to select a 16 bit field to filter on. |
| | | 00 - Use VLAN ID/CFI/PRIORITY |
| | | 01 - Use encoded Protocol, Encoded IP Protocol and 8 bit TOS fields. |
| | | 10 - Use User Defined 16 bit field |
| VALID | 1 | Indicates valid mask |
| MASK | 118 | Mask to mask out the unnecessary bits |
| **TOTAL** | **127** | |

The source port is included in the search key, but a port bitmap may be used instead. Any of the fields not to be used in the search may be masked out using the Mask. The Mask may further be used to specify IP Subnets for both in the Source and Destination IP addresses. The DSCP Field is not used as part of the search key.

With respect to flows, IP Flows may be completely specified by the Source IP, Destination IP, Source L4 Port, Destination L4 Port, Ingress Port, IP Protocol and TOS. In addition, Address ranges and Port ranges are supported usually only with the mask.

The Flow Table identifies the flows that the user wants to classify and prioritize. In order to be able to support a large number of flows, this table can be hashed to improve access thereto. The question that arises is when in the packet processing the Flow Identification needs to be performed and when the actions should be taken. Performing this after the ARL lookups increases the time needed in the ARL to process the packet and hence may not be an option for the 10Gig ports. The recommendation is that this be performed in parallel with the ARL lookup. The results of the Flow Lookup are applied to the result of the ARL lookup to obtain the final results. The flow table is provided below:

**TABLE 4**

| **Field** | **Size** | **Description** |
|---|---|---|
| VALID | 1 | Indicates a valid Flow Entry |
| MASKNUM | 4 | Mask Number for which this entry was made. |
| KEY | 118 | The Search Key obtained as a result of applying the Field Table fields |
| METERID | 8 | The ID of the Meter to be applied if the Key matches. (More Meters would be good) |
| COUNTER | 8 | Counter to be incremented |
| POLICY | 8 | In Profile Policy |
| OOP POLICY | 8 | Out of Profile Policy |
| **TOTAL** | **156** | |

A Flow Policy Table specifies the actions to be taken on the packet. A different policy may be specified for packet that are in-profile and for packet out-of-profile. It is expected that initially 256 policies will be supported. An example of the Flow Policy Table is provided below:

**TABLE 5**

| **Field** | **Size** | **Description** |
|---|---|---|
| VALID | 1 | Indicates a valid Flow Entry |
| CHANGE_PRI | 2 | 00 - NO CHANGE |
| | | 01 - NEW PRI |
| | | 10 - FROM TOS |
| | | 11 - DO NOT CHANGE |
| CHANGE_IPRI | 2 | 00 - NO CHANGE |
| | | 01 - NEW IPRI |
| | | 10 - FROM TOS |
| | | 11 - DO NOT CHANGE |
| CHANGE_TOS | 2 | 00 - NO CHANGE |
| | | 01 - NEW TOS |
| | | 10 - FROM PRI |
| | | 11 - DO NOT CHANGE |
| CHANGE_DSCP | 2 | 00 - NO CHANGE |
| | | 01 - NEW DSCP |
| | | 10 - DO NOT CHANGE |
| | | 11 - RESERVED |
| CHANGE_VLAN | 2 | 00 - NO CHANGE |
| | | 01 - NEW VLAN |
| | | 10 - DO NOT CHANGE |
| | | 11 - RESERVED |
| PKTH | 3 | 000 - NO ACTION |
| | | 001 - DROP |
| | | 010 - DO NOT DROP |
| | | 011 - REDIRECT |
| | | 100 - DO NOT REDIRECT |
| | | 101 - COPY TO CPU |
| | | 110 - EGRESS MASK |
| PRI | 3 | Priority to be used if meter not specified or packet in |
| | | profile |
| IPRI | 3 | Internal Priority |
| TOS | 3 | TOS Field in packet |
| DSCP | 6 | DSCP Field in packet |
| DSTPORT | 8 | Destination Port |
| DSTMOD | 8 | Destination Module |
| VLAN | 12 | New VLAN |
| TOTAL | 45 | |

With respect to the above table, the DSTPORT & DSTMOD are concatenated to form the EGRESS_MASK. Also included in the filtering mechanism of the present invention, a Meter Table is provided to meter the fields and a counter table to provide a count of the number of packets. Details of both tables are given below:

**TABLE 6**

| **Field** | **Size** | **Description** |
|---|---|---|
| BUCKETCOUNT | 19 | The BUCKETSIZE is configurable to one of the following 8 sizes: 16K, 20K, 28K, 40K, 76K, 140K, 268K or 524K tokens. Effectively, this varies the number of bits in the BUCKETCOUNT |
| REFRESHCOUNT | 10 | The number of tokens that are added to the bucket each 8 microsecond refresh interval. The values are from 0 to 1023 tokens. 1 means 1 token and 1023 means 1023 tokens. |
| BUCKETSIZE | 3 | The current count of tokens in the bucket. The count is reduced with incoming packets and is increased by REFRESHCOUNT tokens every 8 microsecond refresh interval. |
| **TOTAL** | **32** | |

**TABLE 7**

| **Field** | **Size** | **Description** |
|---|---|---|
| COUNT | 32 | Count of number of packets |
| **TOTAL** | **32** | |

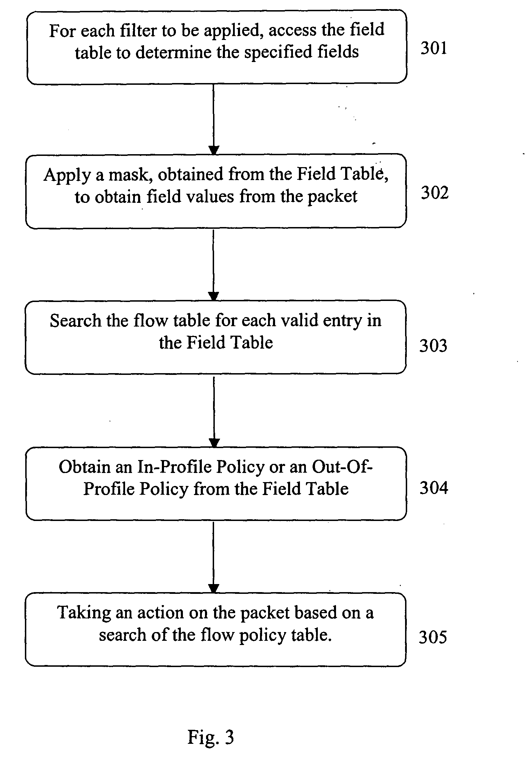

The FFP logic process is illustrated in Fig. 3. In step 301, for each filter to be applied, the Field Table is accessed to determine the fields of the packet to be examined. The Field Table also provides a mask to be applied to the packet to obtain the field values, in Step 302. The Flow Table is then searched, in Step 303, for every valid entry of the Field Table and an In-Profile Policy or an Out-Of-Profile Policy is obtained from the Field Table, Step 304. An action is then taken based on the search of the Flow Policy Table. If the packet is an untagged packet, then the ingress must tag the packet with information got from ARL Logic, before going through the filtering process.

The above process and scalable packet filter provide a more elegant filtering process. The above process is expandable because the tables can be altered easily and the filtering can be accomplished with greater precision with respect'to certain fields that a user desires to filter. The above described process also has greater applicability to the control and characterization of flows than the prior art filtering processes.

The above-discussed configuration of the invention is, in one embodiment, embodied on a semiconductor substrate, such as silicon, with appropriate semiconductor manufacturing techniques and based upon a circuit layout which would, based upon the embodiments discussed above, be apparent to those skilled in the art. A person of skill in the art with respect to semiconductor design and manufacturing would be able to implement the various modules, interfaces, and components, etc. of the present invention onto a single semiconductor substrate, based upon the architectural description discussed above. It would also be within the scope of the invention to implement the disclosed elements of the invention in discrete electronic components, thereby taking advantage of the functional aspects of the invention without maximizing the advantages through the use of a single semiconductor substrate.

Although the invention has been described based upon these preferred embodiments, it would be apparent to those of skilled in the art that certain modifications, variations, and alternative constructions would be apparent, while remaining within the spirit and scope of the invention. In order to determine the metes and bounds of the invention, therefore, reference should be made to the appended claims.

## Claims

1. A network device for network communications, said network device comprising:
at least one data port interface, said at least one data port interface supporting at least one data port transmitting and receiving data;
a CPU interface, said CPU interface configured to communicate with a CPU;
a memory, said memory communicating with said at least one data port interface;
a memory management unit, said memory management unit including a memory interface for communicating data from said at least one data port interface and said memory;
a communication channel, said communication channel for communicating data and messaging information between said at least one data port interface, the CPU interface, said memory, and said memory management unit; and
a fast filtering processor, said fast filtering processor filtering packets coming into the at least one data port interface, and taking selective filter action on a particular packet of said packets based upon specified packet field values;
wherein said specified packet field values are obtained by applying a filter mask, obtained from a field table, to the particular packet and the selective filter action is obtained from a policy table based on the specified packet field values.

2. A network device as recited in claim 1, wherein said fast filtering processor is programmable by inputs from the CPU through the CPU interface.

3. A network device as recited in claim 1, wherein one data port interface includes a flow table interface and a flow table thereupon, wherein said specified packet field values are used to obtain a policy value from the flow table and the selective filter action is obtained from a policy table based on the policy value.

4. A network device as recited in claim 3, wherein said at least one data port interface, CPU interface, memory, memory management unit, communications channel, fast filtering processor, and said flow table are implemented on a common semiconductor substrate.

5. A network device as recited in claim 1, wherein said specified packet field values are selected based upon flows of data packets through the network device.

6. A network device as recited in claim 1, wherein said flows of data packets are defined by at least one of a source internet protocol address, a destination internet protocol address, a source media access controller address, a destination media access controller address and a protocol for the particular packet.

7. A network switch as recited in claim 1, said fast filtering processor comprising a priority assignment unit for assigning a weighted priority value to untagged packets entering the at least one data port interface.

8. A network switch as recited in claim 1, wherein the fast filtering processor filters the packets independent of the CPU interface, and therefore without communicating with the CPU.

9. A network switch as recited in claim 1, wherein the fast filtering processor includes a tagging unit which applies an IEEE defined tag to incoming packets, said IEEE defined tag identifying packet parameters.

10. A network switch as recited in claim 9, wherein said packet parameters include class-of-service.

11. A method of handling data packets in a network device, said method comprising:
placing incoming packets into an input queue;
applying the input data packets to an address resolution logic engine;
performing a lookup to determine whether certain packet fields are stored in a lookup table;
filtering the incoming packet through a fast filtering processor based on specified packet field values obtained from the incoming packets to obtain a selective filter action; and
discarding, forwarding, or modifying the packet based upon the filtering; and
wherein the selective filter action is obtained from a policy table based on the specified packet field values.

12. A method as recited in claim 11, further comprising:
obtaining a policy value from a flow table based on said specified packet field values; and
obtaining the selective filter action from a policy table based on the policy value.

13. A method as recited in claim 11, wherein said steps of performing a lookup and filtering the incoming packet through a fast filtering processor are performed concurrently.

14. A method as recited in claim 11, wherein said step of filtering the incoming packet through a fast filtering processor comprises filtering the incoming packet based on specified packet field values selected based upon flows of data packets through the network device.

15. A method as recited in claim 11, wherein filtering the incoming packet includes a step of tagging the incoming packet with an IEEE defined tag.

16. A method as recited in claim 12, wherein said IEEE defined tag defines packet parameters, including class-of-service priority.

17. A network device for handling data packets, said network device comprising:
placing means for placing incoming packets into an input queue;
applying means for applying the input data packets to an address resolution logic engine;
performing means for performing a lookup to determine whether certain packet fields are stored in a lookup table;
filtering means for filtering the incoming packet through a fast filtering processor based on specified packet field values obtained from the incoming packets to obtain a selective filter action; and
means for discarding, forwarding, or modifying the packet based upon the filtering; and
wherein the selective filter action is obtained from a policy table based on the specified packet field values.

18. A network device as recited in claim 17, further comprising:
obtaining means for obtaining a policy value from a flow table based on said specified packet field values; and
obtaining means for obtaining the selective filter action from a policy table based on the policy value.

19. A network device as recited in claim 17, wherein said performing means and said filtering means are configured to perform their respective functions concurrently.

20. A network device as recited in claim 17, wherein said filtering means comprises filtering means for filtering the incoming packet based on specified packet field values selected based upon flows of data packets through the network device.

21. A network device as recited in claim 17, wherein said filtering means comprises tagging means for tagging the incoming packet with an IEEE defined tag.

22. A network device as recited in claim 21, wherein said IEEE defined tag defines packet parameters, including class-of-service priority.
